(19) Europäisches Patentamt
European Patent Office
Office européen des brevets

(11) Veröffentlichungsnummer: **0 291 754 B1**

(12) **EUROPÄISCHE PATENTSCHRIFT**

(45) Veröffentlichungstag der Patentschrift: **09.12.92**

(51) Int. Cl.⁵: **B01D  53/34**, C21B 13/00,
C21B 13/14

(21) Anmeldenummer: **88107029.6**

(22) Anmeldetag: **02.05.88**

(54) **Verfahren zur Entfernung von Schwefel aus dem Abgas eines Reduktionsschachtofens.**

(30) Priorität: **16.05.87 DE 3716511**

(43) Veröffentlichungstag der Anmeldung:
**23.11.88 Patentblatt  88/47**

(45) Bekanntmachung des Hinweises auf die
Patenterteilung:
**09.12.92 Patentblatt  92/50**

(84) Benannte Vertragsstaaten:
**DE GB IT LU SE**

(56) Entgegenhaltungen:
**EP-A- 0 021 601**
**EP-A- 0 193 488**
**DE-A- 2 434 884**

(73) Patentinhaber: **DEUTSCHE VOEST-ALPINE IN-
DUSTRIEANLAGENBAU GMBH
Neusser Strasse 111
W-4000 Düsseldorf 1(DE)**

(72) Erfinder: **Hauk , Rolf, Dr.-Ing.
Friedrichstrasse 45
W-4000 Düsseldorf(DE)**

(74) Vertreter: **Meinig, Karl-Heinz, Dipl.-Phys. et al
PATENTANWÄLTE PFENNING MEINIG &
PARTNER ANWALTSSOZIETÄT Mozartstrasse 17
W-8000 München 2(DE)**

**Beschreibung**

Die Erfindung betrifft ein Verfahren nach dem Oberbegriff des Anspruchs 1.

Das Abgas von Reduktionsschachtöfen ist grundsätzlich schwefelhaltig, da das eingesetzte Eisenerz sowie auch die zur Erzeugung des Reduktionsgases verwendeten Ausgangsstoffe üblicherweise Schwefel enthalten. Der im Abgas enthaltene Schwefel liegt im wesentlichen in der Verbindung $H_2S$ vor und die Konzentration dieses Gases beträgt im allgemeinen zwischen 50 und 100 ppm, wobei dieser Bereich je nach der Qualität der eingesetzten Materialien jedoch auch erheblich über- oder unterschritten werden kann.

Das Abgas der Reduktionsschachtöfen wird üblicherweise aufbereitet und zum Teil als Reduktionsgas oder für die Reduktionsgasgewinnung zurückgeführt und/oder auch als Exportgas abgeführt und anderweitig genutzt. Insbesondere im Exportgas kann die Schwefelverbindung hinderlich sein, so daß es geboten ist, diese vor der Nutzung des Exportgases aus diesem zu entfernen.

Die Aufbereitung des Abgases erfolgt im allgemeinen derart, daß es zunächst in einem Wäscher von Feststoffteilchen gereinigt wird, wobei es auf eine Temperatur zwischen etwa 30 - 60°C abgekühlt werden muß. Danach wird das im Abgas enthaltene $CO_2$ entfernt, da es bei der weiteren Verwendung des Abgases hinderlich ist. Das abgetrennte $CO_2$ enthält etwa 200 ppm $H_2S$, so daß es aus Umweltgründen in diesem Zustand nicht an die Umgebung abgegeben werden darf und auch für eine etwaige Weiterverarbeitung nicht geeignet ist. Daher werden überlicherweise die Schwefelverbindungen aus den Teilen des Abgases entfernt, die nicht als Prozeßgas in den Reduktionsvorgang zurückgeführt werden. Diese Entschwefelung wird bisher mit Hilfe der sogenannten Stretford-Wäsche (Verlag Chemie, Weinheim, 1978, Seiten 267/268 "Rohstoff Kohle" oder durch "Luxmasse" oder "Raseneisenerz" (Römpps Chemie-Lexikon, Franckh'sche Verlagshandlung, Stuttgart, 1979)) durchgeführt. Diese Verfahren sind aufwendig und benötigen zusätzliche Materialien wie Aktivkohle oder Absorptionsmittel, die unter anderem gesondert gelagert und entsorgt werden müssen.

Außerdem ist aus DE-OS 24 34 884 ein Verfahren zur Reduktion von Eisenerz bekannt, bei dem eine Entschwefelungseinrichtung, bei der die Entschwefelung mit den bekannten Materialien Kalkstein und Dolomit erfolgt, vorgesehen ist. Hierbei wird in erster Linie eine Entschwefelung des aus dem Vergaser abgezogenen Reduktionsgases, das einem Reduktionsschachtofen zugeführt werden soll, durchgeführt. Dieses Gas wird vor der Entschwefelung mit einem Anteil Umlaufgas gemischt. Es enthält nach der Entschwefelung noch eine gewisse Menge Schwefelwasserstoff. Dieser soll das heruntersinkende reduzierte Eisenerz in der Kühlzone des Reduktionsschachtofens mit Schwefel geringfügig imprägnieren.

Es kann mit dieser Lösung nicht verhindert werden, daß das aus dem Reduktionsschachtofen abgezogene Abgas erneut Shwefel bzw. Schwefelwasserstoff enthält, den es aus den für die Eisenerzreduktion erforderlichen Stoffen aufnimmt. Sollte es also als Exportgas verwendet werden, ist eine erneute Entschwefelung erforderlich. Außerdem werden in der Entschwefelungseinrichtung zusätzliche Materialien verwendet, die bei der Erzeugung von Reduktionsgas und der Reduktion von Eisenerz ansonsten nicht benötigt werden. Nicht nur dadurch entsteht ein zusätzlicher Aufwand schließlich müssen sie im Anschluß an die Entschwefelung evtl. behandelt oder entsorgt werden.

Es ist daher die Aufgabe der vorliegenden Erfindung, die bekannten Verfahren zur Entfernung des in mindestens einer gasförmigen Verbindung enthaltenen Schwefels durch Absorption aus mindestens einem Teil des Abgases eines Reduktionsschachtofens für Eisenerz, wobei das Abgas zunächst in einem Wäscher gereinigt und gekühlt wird und anschließend die Schwefelentfernung erfolgt, dahingehend zu verbessern, daß die Entschwefelung auf einfache Weise und ohne den Einsatz ausschließlich hierzu benötigter Materialien erfolgt.

Diese Aufgabe wird erfindungsgemäß durch das im kennzeichnenden Teil des Anspruchs 1 angegebene Merkmal gelöst. Vorteilhafte Weiterbildungen des erfindungsgemäßen Verfahrens sowie bevorzugte Vorrichtungen zur Durchführung dieses Verfahrens ergeben sich aus den Unteransprüchen.

Die Erfindung zeichnet sich dadurch aus, daß als den Schwefel absorbierendes Material ein Teil des im Reduktionsschachtofen erzeugten Eisenschwamms verwendet wird. Dieser zur Schwefelabsorption verwendete Teil des Eisenschwamms wird vorzugsweise dem anderen Teil des im Reduktionsschachtofen erzeugten Eisenschwamms wieder zugeführt. Das vorliegende Verfahren ist somit extrem einfach und rationell, da überhaupt keine zusätzlichen Materialien für die Entfernung des Schwefels erforderlich sind. Es wird somit jeglicher Aufwand vermieden, der sonst mit der Beschaffung und Beseitigung dieser Materialien verbunden ist.

Die Schwefelabsorption wird bei einer Temperatur im Bereich von etwa 30 - 60°C durchgeführt. Je niedriger diese Temperatur ist, desto mehr Schwefel wird vom Eisen aufgenommen, d.h. desto geringer ist die Konzentration des im Gas verbleibenden Schwefels.

Vorzugsweise werden der im Reduktionsschachtofen erzeugte, nicht zur Schwefelabsorption verwendete Eisenschwamm in einen Einschmelzvergaser übergeführt und in diesem geschmolzen und zu Roheisen fertigreduziert und der zur Absorption des Schwefels verwendete Eisenschwamm nach der Aufnahme des Schwefels ebenfalls in den Einschmelzvergaser eingegeben. Im Einschmelzvergaser wird der Schwefel durch eingegebene Zuschlagsstoffe in der sich über dem Eisenbad sammelnden flüssigen Schlacke gebunden. Diese wird ebenso wie das flüssige Roheisen in vorgegebenen Zeitabständen abgestochen.

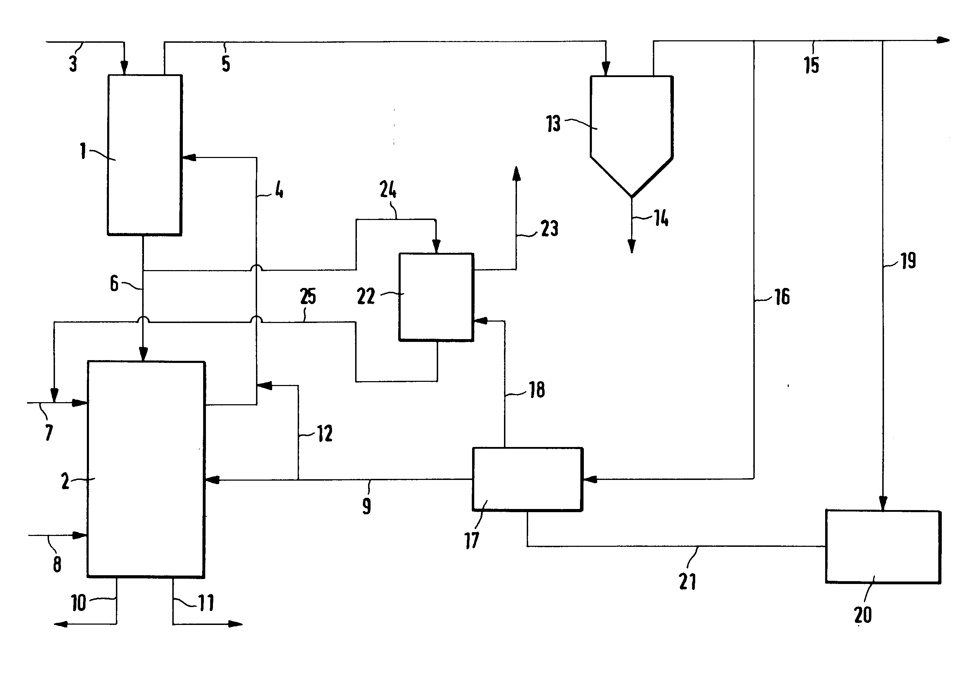

Die Erfindung wird im folgenden anhand eines in der Figur dargestellten Ausführungsbeispiels näher erläutert.

Diese zeigt in schematischer Darstellung eine Anlage zur Erzeugung von flüssigem Roheisen aus Eisenerz.

Die gezeigte Anlage besteht im wesentlichen aus einem Direktreduktions-Schachtofen 1 und einem unter diesem befindlichen Einschmelzvergaser 2. Dem Schachtofen 1 wird in bekannter Weise über eine Leitung 3 vorzugsweise stückiges Eisenerz zugeführt. Über eine Leitung 4 wird Reduktionsgas in den Schachtofen 1 eingeblasen, das entgegen dem Strom des nach unten sinkenden Eisenerzes nach oben aufsteigt und die Reduktion des Eisenerzes bewirkt. Nach Durchströmen des Schachtofens 1 wird dieses Gas als Gichtgas über eine Leitung 5 abgeführt.

Über Fallrohre 6 gelangt das zu Eisenschwamm reduzierte Eisenerz in den Einschmelzvergaser 2. Dem Einschmelzvergaser 2 wird in bekannter Weise über eine Leitung 7 ein Kohlenstoffträger beispielsweise in Form von Braunkohlen-Hochtemperaturkoks sowie über eine Leitung 8 ein sauerstoffhaltiges Gas zugeführt. Außerdem wird über eine Leitung 9 in noch zu beschreibender Weise aufbereitetes Gichtgas des Schachtofens 1 in den Einschmelzvergaser 2 eingeleitet. In vorgegebenen Zeitabständen werden über eine Leitung 10 flüssiges Roheisen und über eine Leitung 11 flüssige Schlacke aus dem Einschmelzvergaser 2 herausgeführt.

Im Einschmelzvergaser 2 wird im wesentlichen aus CO und $H_2$ bestehendes Gas erzeugt, das eine Temperatur von etwa 1000° besitzt und über die Leitung 4 als Reduktionsgas in den Schachtofen 1 eingeblasen wird. Zuvor wird ihm über eine Leitung 12, die von der Leitung 9 abzweigt, aufbereitetes Gichtgas zugemischt, so daß sich die Temperatur des Reduktionsgases auf einen für die Reduktion geeigneten Wert von etwa 850° C einstellt.

Das Gichtgas wird über die Leitung 5 zunächst in einen Wäscher 13 geleitet, indem es auf eine Temperatur von beispielsweise 35° abgekühlt wird und in dem die Feststoffteilchen aus dem Gichtgas ausgesondert werden. Diese werden über eine Leitung 14 vorzugsweise in den Einschmelzvergaser 2 eingegeben.

Aus dem Wäscher 13 gelangt das abgekühlte und gereinigte Gichtgas in eine Leitung 15. Von dieser zweigt eine Leitung 16 ab, die das in den Reduktionsprozeß zurückgeführte Gichtgas aufnimmt. Die Leitung 16 mündet in einen $CO_2$-Wäscher 17, in dem in bekannter Weise dem Gichtgas das $CO_2$ entzogen wird. Das aufbereitete Gichtgas wird über die Leitung 9 und das $CO_2$ über eine Leitung 18 abgeführt.

Weiteres Gichtgas aus der Leitung 15 gelangt über eine Leitung 19 in einen Dampferzeuger 20, in dem es für die Bildung von Dampf verbrannt wird. Der Dampf wird über eine Leitung 21 zum $CO_2$-Wäscher 17 befördert, indem er für die Trennung des $CO_2$ vom Gichtgas benötigt wird.

Die Prozeßparameter werden vorzugsweise so eingestellt, daß das gesamte im Schachtofen 1 erzeugte Gichtgas für die Aufrechterhaltung des Reduktionsvorganges benötigt wird. Dies bedeutet, daß das gesamte durch die Leitung 15 strömende Gichtgas von den Leitungen 16 und 19 aufgenommen wird. Sollte jedoch ein Teil des Gichtgases insoweit nicht benötigt werden, wird er als Exportgas für eine anderweitige Verwendung abgeführt.

Das mit einem $H_2S$-Gehalt von beispielsweise 200 ppm beladene $CO_2$ gelangt aus dem $CO_2$-Wäscher 17 über Leitung 18 in einen Entschwefelungsreaktor 22. Es steigt in diesem durch eine aus Eisenschwamm bestehende Säule nach oben und wird über eine Leitung 23 ins Freie abgelassen oder einer Weiterverarbeitung zugeführt.

Der Entschwefelungsreaktor 22 wird von oben über eine Leitung 24 mit Eisenschwamm beschickt, die an den Eisenschwammauslaß des Schachtofens 1 angeschlossen ist. Durch entsprechende Fördereinrichtungen wird ein geringer Teil des im Schachtofen 1 erzeugten Eisenschwamms kontinuierlich oder diskontinuierlich zum Entschwefelungsreaktor 22 transportiert. Am Boden des Entschwefelungsreaktors 22 befindet sich ein Auslaß, der mit einer Leitung 25 verbunden ist. Entsprechend der über die Leitung 24 zugeführten Menge wird über die Leitung 25 Eisenschwamm aus dem Entschwefelungsreaktor 22 abgeführt, so daß der Eisenschwamm im Entschwefelungsreaktor 22 entgegen dem $CO_2$ Strom nach unten sinkt. Der Eisenschwamm reagiert mit dem im $CO_2$ befindlichen $H_2S$ in der Weise, daß sich Eisensulfid und Wasserstoff bilden. Das Eisensulfid wird über die Leitung 25 abgenommen, so daß das über die Leitung 23 abgeführte Gas im wesentlichen schwefelfrei ist.

Die genannte Reaktion zwischen Eisen und $H_2S$ wird durch relativ niedrige Temperaturen begünstigt. Es ist daher erforderlich, daß das Gichtgas abgekühlt wird, bevor es auf die beschriebene Weise entschwefelt werden kann. Bei der Temperatur, mit der das Gichtgas den Schachtofen 1 verläßt, wäre eine derartige Entschwefelung nur bei

einem höheren $H_2S$-Gehalt als etwa 800 ppm möglich. Eine derartige Schwefelkonzentration wird im Gichtgas jedoch üblicherweise nicht erreicht, so daß die beschriebene Entschwefelung nur dann sinnvoll ist, wenn das Gichtgas zunächst abgekühlt wird, wobei die zweckmäßige Temperatur im Bereich von 30 - 60°C liegt.

Das entschwefelte Gas hat dann einen $H_2S$-Gehalt von weniger als 1 ppm.

Der mit Schwefel beladene Eisenschwamm gelangt über die Leitung 25 in die Leitung 7, über die er zusammen mit dem Kohlenstoffträger in den Einschmelzvergaser 2 zugegeben wird. In diesem wird der Eisenschwamm durch Schwefel bindende Zuschlagsstoffe vom Schwefel befreit und wird ebenso wie der über die Fallrohre 6 eingegebene Eisenschwamm geschmolzen und zu Roheisen fertig reduziert. Der Schwefel ist in der über die Leitung 11 abgezogenen Schlacke gebunden.

Es ist aufgrund der geringeren Gasmenge und der höheren Schwefelkonzentration sinnvoll, wie im Ausführungsbeispiel gezeigt nur den abgezweigten $CO_2$-Gasstrom zu entschwefeln. Allerdings kann es dabei durch das $CO_2$ und Feuchtigkeit zu einer Reoxidation des Eisens kommen, was zu einer CO bzw. $H_2$-Bildung mit einer Konzentration von etwa 500 ppm führt. Es kann daher unter Umständen vorteilhaft sein, die Schwefelentfernung im Gichtgas schon vor dem Entzug des $CO_2$ durchzuführen. Dabei wirkt auch FeO als Entschwefelungsmittel.

Überschüssiges, als Exportgas verwendetes Gichtgas wird vor seiner Weiterverwendung zweckmäßig ebenfalls einer Entschwefelung unterzogen. Dabei kann es durch einen eigenen Entschwefelungsreaktor geführt werden oder es wird zusammen mit dem als Prozeßgas zurückgeführten Gichtgas entschwefelt und dann von diesem abgezweigt.

Für eine Anlage zur Erzeugung von 40 Tonnen Roheisen pro Stunde benötigt man bei einer Schwefelbeladung von 50% und einem $H_2S$-Gehalt von 80 ppm im Gichtgas nur 20 Kilogramm Eisenschwamm pro Stunde für die Beschickung des Entschwefelungsreaktors 22. Es werden dabei etwa 62900 $Nm^3$/h Gichtgas mit einer Zusammensetzung von etwa 37,2% CO, 32,8% $CO_2$, 12,0% $H_2S$, 12,9% $H_2O$ sowie etwas $CH_4$ und $N_2$ erzeugt. Hiervon werden 42850 $Nm^3$/h über die Leitung 16 zum $CO_2$-Wäscher 17 geführt, während der Rest zur Erzeugung von Dampf im Dampferzeuger 20 dient und kein Exportgas abgegeben wird. 15350 $Nm^3$/h $CO_2$ werden über die Leitung 18 in den Entschwefelungsreaktor 22 geleitet, während von dem verbleibenden aufbereiteten Gichtgas 18500 $Nm^3$/h in den Einschmelzvergaser 2 und 9000 $Nm^3$/h über die Leitungen 12 und 4 direkt als Reduktionsgas in den Schachtofen 1 geleitet werden. Über die Leitung 3 werden dem Schachtofen 1 60 t/h Eisenerz in Pelletform sowie 3 t/h Dolomit und 5,6 t/h Kalkstein als Zuschlagsstoffe zugeführt. Die gesamte in den Schachtofen 1 eingeleitete Reduktionsgasmenge beträgt 61000 $Nm^3$/h mit einem CO-und $H_2$-Anteil von 90%. Zur Erzeugung dieses Reduktionsgases sowie zum Schmelzen und Fertigreduzieren des Eisenschwamms werden in den Einschmelzvergaser 2 weiterhin 18,5 t/h Kohle und 11700 $Nm^3$/h Sauerstoff eingeblasen.

**Patentansprüche**

1. Verfahren zur Entfernung des in mindestens einer gasförmigen Verbindung enthaltenen Schwefels durch Absorption aus mindestens einem Teil des Abgases eines Reduktionsschachtofens für Eisenerz, wobei das Abgas zunächst in einem Wäscher gereinigt und gekühlt wird und anschließend die Schwefelentfernung erfolgt, dadurch gekennzeichnet, daß ein Teil des im Reduktionsschachtofen (1) erzeugten Eisenschwamms in einen Entschwefelungsreaktor (22) ausgeschleust wird und dort als den Schwefel absorbierendes Material verwendet wird und daß die Schwefelabsorption bei einer Temperatur im Bereich von 30 - 60°C durchgeführt wird.

2. Verfahren nach Anspruch 1, dadurch gekennzeichnet, daß der zur Schwefelabsorption verwendete Teil des Eisenschwamms dem anderen Teil des im Reduktionsschachtofen (1) erzeugten Eisenschwamms wieder zugeführt wird.

3. Verfahren nach Anspruch 1 oder 2, dadurch gekennzeichnet, daß der vom Schwefel befreite Teil des Abgases von diesem abgetrenntes $CO_2$ ist.

4. Verfahren nach Anspruch 1 oder 2, dadurch gekennzeichnet, daß dem Abgas nach der Entfernung des Schwefels das in ihm enthaltene $CO_2$ entzogen wird.

5. Verfahren nach einem der Ansprüche 1 bis 4, dadurch gekennzeichnet, daß der als Exportgas abgeführte Teil des Abgases vom Schwefel befreit wird.

6. Verfahren nach einem der Ansprüche 1 bis 5, dadurch gekennzeichnet, daß der im Reduktionsschachtofen (1) erzeugte, nicht zur Schwefelabsorption verwendete Eisenschwamm in einen Einschmelzvergaser (2) übergeführt und in diesem geschmolzen und zu Roheisen fertigreduziert wird, und daß der zur Absorption des Schwefels verwendete Eisenschwamm nach der Aufnahme des Schwefels ebenfalls in den Einschmelzvergaser (2) eingegeben wird.

7. Verfahren nach Anspruch 6, dadurch gekennzeichnet, daß der mit dem Schwefel beladene Eisenschwamm zusammen mit einem festen Kohlenstoffträger in den Einschmelzvergaser (2) eingegeben wird.

8. Verfahren nach Anspruch 6 oder 7, dadurch gekennzeichnet, daß mindestens ein Teil des Abgases nach der Abtrennung von $CO_2$ als Teil des Reduktionsgases in den Reduktionsschachtofen (1) zurückgeführt wird.

9. Verfahren nach einem der Ansprüche 6 bis 8, dadurch gekennzeichnet, daß ein Teil des Abgases nach der Abtrennung von $CO_2$ in den Einschmelzvergaser (2) geleitet wird.

10. Verfahren nach einem der Ansprüche 6 bis 9, dadurch gekennzeichnet, daß die Schwefelentfernung bei einem abgetrennten Teil des Abgases, der nicht in den Reduktionsprozeß zurückgeführt wird, vorgenommen wird.

11. Vorrichtung zur Durchführung des Verfahrens nach einem der Ansprüche 6 bis 10, dadurch gekennzeichnet, daß ein Entschwefelungsreaktor (22) für die Entschwefelung der Abgase des Reduktionsschachtofens (1) vorgesehen ist, dessen Feststoffeinlaß, zur Beschickung des Entschwefelungsreaktors (22) mit Eisenschwamm, über eine Leitung (24) mit dem Feststoffauslaß (6) des Reduktionsschachtofens (1) und dessen Feststoffauslaß mit dem Einlaß (7) für den Kohlenstoffträger in den Einschmelzvergaser (2) über eine Leitung (25) verbunden sind.

12. Vorrichtung nach Anspruch 12, dadurch gekennzeichnet, daß der Gaseinlaß des Entschwefelungsreaktors (22) mit dem $CO_2$-Auslaß eines $CO_2$-Wäschers (17), in dem das im Abgas des Reduktionsschachtofens (1) enthaltene $CO_2$ ausgeschieden wird, über die Leitung (18) verbunden ist.

## Claims

1. Process for removal of sulphur, which is contained at least in a gaseous combination, by absorption of at least one portion of waste gases of a reduction shaft furnace for iron ore, in which the waste gas is initially cleaned in a washer and cooled and sulphur is subsequently removed, **characterised in that** a portion of sponge iron produced in a reduction shaft furnace (1) is exfiltrated in a desulphurization reactor (22) and used thereat as sulphur-absorbing material, and that the sulphur absorption is carried out at a temperature in the region between 30 and 60°.

2. Process according to claim 1, **characterised in that** the portion of sponge iron used for sulphur absorption is fed back to the other portion of sponge iron which has been produced in the reduction shaft furnace (1).

3. Process according to claim 1 or 2, **characterised in that** the portion of desulphurized waste gas is therefrom separated $CO_2$.

4. Process according to claim 1 or 2, **characterised in that** after removal of sulphur from the waste gas, therein contained $CO_2$ will be removed.

5. Process according to one of claims 1 to 4, **characterised in that** the portion of waste gas which is removed as export gas is desulphurized.

6. Process according to one of claims 1 to 5, **characterised in that** sponge iron, which has been produced in the reduction shaft furnace (1) but is not used for sulphur absorption, is transferred into a melting furnace (2), melted therein and finally reduced to pig iron, and that the sponge iron used for absorbing sulphur is also fed to the melting furnace (2) after having absorbed sulphur.

7. Process according to claim 6, **characterised in that** sulphur-loaded sponge iron is delivered to a melting furnace (2) together with a solid carbon carrier.

8. Process according to claim 6 or 7, **characterised in that,** after separation of $CO_2$, at least one portion of the waste gas is fed back as part of a reduction gas into the reduction shaft furnace (1).

9. Process according to one of claims 6 to 8, **characterised in that,** after separation of $CO_2$, a portion of the waste gas is ducted into the melting furnace (2).

10. Process according to one of claims 6 to 9, **characterised in that** sulphur removal is carried out with a separated portion of waste gas which is not fed back into the reduction process.

**11.** Device for carrying out the process according to one of claims 6 to 10, **characterised in that** a desulphurizing reactor (22) for desulphurization of waste gases of a reduction shaft furnace (1) is provided, the solids inlet for supplying the desulphurization reactor (22) with sponge iron is connected via a pipe (24) to the solids outlet (6) of a reduction shaft furnace (1), and the solids outlet of which is connected to the inlet (7) for a carbon carrier into the melting furnace (2) via a pipe (25).

**12.** Device according to claim 12, **characterised in that** the gas inlet of the desulphurization reactor (22) is connected via a pipe (18) to a $CO_2$ outlet of a $CO_2$ washer (17) in which the $CO_2$ contained in the waste gas of a reduction shaft furnace (1) his expelled.

**Revendications**

**1.** Méthode pour l'enlèvement du soufre contenu dans au moins une liaison gazeuse par absorption, d'au moins une partie des gaz d'échappement d'un four à réduction pour minerai de fer, dans lequel le gaz d'échappement est d'abord nettoyé et refroidi dans un laveur et l'enlèvement du soufre est opéré par la suite, caractérisée en ce qu'une partie du fer-éponge produit dans le four vertical à réduction (1) est éclusée au dehors dans un réacteur de désulfurisation (22) et est utilisée à cet endroit en tant que partie du matériel absorbant le soufre et que l'absorption du soufre est effectuée à une température entre 30 et 60 °C.

**2.** Procédé selon la revendication 1 caractérisé en ce que la partie du fer-éponge utilisée pour l'absorption du soufre est reconduite vers l'autre partie du fer-éponge produit dans le four vertical à réduction (1).

**3.** Procédé selon la revendication 1 ou 2 caractérisé en ce que la partie des gaz d'échappement libérée du soufre est constituée de $CO_2$ qui a été séparé de celui-ci.

**4.** Procédé selon la revendication 1 ou 2 caractérisé en ce que le $CO_2$ contenu dans les gaz d'échappement après l'enlèvement du soufre est enlevé.

**5.** Procédé selon l'une quelconque des revendications 1 à 4 caractérisé en ce que la partie des gaz d'échappement utilisés en tant que gaz d'exportation est libérée du soufre.

**6.** Procédé selon l'une des revendications 1 à 5 caractérisé en ce que le fer-éponge produit dans le four vertical à réduction (1), qui n'est pas utilisé pour l'absorption du soufre, est conduit dans un gazéificateur de fusion (2) et est fondu dans celui-ci et réduit jusqu'au stade de fer brut, et en ce que la partie du fer-éponge utilisée pour l'absorption du soufre est également reconduite après absorption du soufre dans le gazéificateur de fusion (2).

**7.** Procédé selon la revendication 6 caractérisé en ce que le fer-éponge chargé de soufre est introduit avec un porteur de carbone solide dans le gazéificateur de fusion (2).

**8.** Procédé selon la revendication 6 ou 7 caractérisé en ce qu'au moins une partie des gaz d'échappement est reconduite après séparation du $CO_2$ en tant que partie des gaz de réduction dans le four vertical à réduction (1).

**9.** Procédé selon l'une des revendications 6 à 8 caractérisé en ce qu'une partie des gaz d'échappement après séparation du $CO_2$ est conduite dans le gazéificateur de fusion (2).

**10.** Procédé selon l'une des revendications 6 à 9 caractérisé en ce que l'enlèvement du soufre est pratiqué sur une partie des gaz d'échappement qui n'est pas reconduite dans le processus de réduction.

**11.** Dispositif pour la mise en oeuvre du procédé selon l'une des revendications 6 à 10 caractérisé en ce qu'un réacteur de désulfurisation (22) pour la désulfurisation des gaz d'échappement du four vertical à réduction (1) est prévu, dont l'alimentation par les produits solides, pour la charge du réacteur de désulfurisation (22) avec du fer-éponge, est reliée par un conduit (24) avec la sortie des matières solides (6) du four vertical à réduction (1) et dont la sortie des matières solides est reliée avec l'entrée (7) pour le porteur de carbone dans le gazéificateur de fusion (2) par un conduit (25).

**12.** Dispositif selon la revendication 11 caractérisé en ce que l'entrée des gaz du réacteur de désulfurisation (22) est reliée, par un conduit (18), à la sortie de $CO_2$ d'un laveur à gaz de $CO_2$ (17) dans lequel le $CO_2$ contenu dans les gaz d'échappement du four vertical à réduction (12) est éliminé.